(19) Europäisches Patentamt
European Patent Office
Office européen des brevets

(11) **EP 1 484 247 B1**

(12) **FASCICULE DE BREVET EUROPEEN**

(45) Date de publication et mention de la délivrance du brevet:
**14.07.2010 Bulletin 2010/28**

(51) Int Cl.:
***B64G 1/28*** *(2006.01)*     ***G01C 19/06*** *(2006.01)*
***G01C 19/08*** *(2006.01)*

(21) Numéro de dépôt: **04076876.4**

(22) Date de dépôt: **21.07.1999**

(54) **Actionneur gyroscopique, notamment pour dispositif de pilotage de l'attitude d'un satellite**

Gyroskopischer Stellantrieb, insbesondere für die Lageregelung eines Satelliten

Gyroscopic actuator specially for the attitude control of a satellite

(84) Etats contractants désignés:
**BE DE ES GB IT SE**

(30) Priorité: **19.11.1998 FR 9814548**

(43) Date de publication de la demande:
**08.12.2004 Bulletin 2004/50**

(62) Numéro(s) de document de la (des) demande(s) initiale(s) en application de l'article 76 CBE:
**99401843.0 / 1 002 716**

(73) Titulaire: **EADS ASTRIUM SAS**
**31402 Toulouse Cedex 4 (FR)**

(72) Inventeurs:
• **Defendini, Ange**
**31380 Montjoire (FR)**

• **Lagadec, Kristen**
**31400 Toulouse (FR)**

(74) Mandataire: **Bérogin, Francis**
**Cabinet Plasseraud**
**52 rue de la Victoire**
**75440 Paris Cedex 09 (FR)**

(56) Documents cités:
**US-A- 3 452 948**    **US-A- 3 603 161**
**US-A- 4 211 452**    **US-A- 5 256 942**

• **PATENT ABSTRACTS OF JAPAN vol. 013, no. 552 (M-903), 8 décembre 1989 (1989-12-08) & JP 01 226496 A (TOSHIBA CORP), 11 septembre 1989 (1989-09-11)**

**Description**

La présente invention concerne un actionneur gyroscopique, notamment pour dispositif de pilotage d'attitude de satellite par commande d'orientation de l'axe de rotation de la toupie d'actionneurs gyroscopiques ou gyrodynes d'une grappe de gyrodynes montée dans le satellite.

Les gyrodynes ou actionneurs gyroscopiques (désignés souvent par le sigle anglo-saxon cmg) se différencient des roues de réaction, couramment utilisées pour commander l'attitude d'un satellite par échange de moment cinétique, en ce qu'ils sont montés sur un support, appelé cardan, orientable par au moins un moteur autour d'au moins un axe orthogonal à l'axe de rotation de la toupie. Dans la plupart des cas les toupies sont entraînées à vitesse constante ou du moins peu variable lors de leur mise en oeuvre.

Une grappe de gyrodynes doit comporter au moins trois gyrodynes pour permettre de réorienter un trièdre de référence liée au satellite dans toutes les attitudes et au moins deux gyrodynes pour un pilotage 2 axes. En pratique on utilise au moins quatre gyrodynes en grappe pour assurer une redondance.

La grappe de gyrodynes constitue un actionneur inertiel dont la commande permet d'appliquer un couple donnant à la plate-forme du satellite un profil de vitesses angulaires spécifié, généralement par téléchargement à partir du sol. Le couple est généré par mise en vitesse de l'axe cardan de façon à faire précessionner la toupie. Pour la toupie d'ordre i, le couple $C_i$ du à l'effet gyroscopique est donné par :

$$C_i = H_i \, \dot{\sigma} \, i$$

Où

$H_i$ est le moment d'inertie de la toupie d'ordre :
$\sigma_i$ est la vitesse angulaire.

Un satellite comporte généralement un système de commande d'attitude qui reçoit des signaux d'entrée de capteurs permettant de déterminer sa position angulaire dans un repère inertiel. Ce système, qui a généralement une constante de temps relativement longue, permet de maintenir le satellite dans une attitude de consigne en commandant les moteurs des roues de réaction, ou ceux des cardans lorsque le satellite est muni de gyrodynes.

Dans le cas, considéré ici, du contrôle d'attitude à l'aide d'une grappe de gyrodynes, le système de commande détermine d'abord le couple à appliquer et doit en déduire une vitesse à appliquer aux cardans des gyrodynes. Les positions angulaires des cardans varient au cours du temps. La capacité de fourniture du couple total C est en conséquence non stationnaire et non linéaire. Elle peut s'écrire, sous forme matricielle :

$$C = A(\sigma).\sigma \qquad\qquad\qquad (1)$$

où A est la matrice jacobienne $a_{ij} = \partial H_i/\partial \sigma_j$, avec i=1 à 3 et j=1 à 4 (ou plus généralement un au nombre de gyrodynes).

Une méthode classique de guidage consiste, connaissant le couple C à fournir, à inverser la relation (1) pour obtenir les vitesses $\sigma_c$ de consigne à donner aux gyrodynes.

Certaines missions prévoient des modifications importantes d'attitude du satellite dans des délais courts. Les gyrodynes sont particulièrement adaptés à ces missions « agiles ». A l'heure actuelle, on utilise essentiellement deux méthodes pour déterminer le profil de vitesses à imposer aux supports des gyrodynes.

Suivant un premier procédé, qu'on peut qualifier de guidage local, on calcule à chaque demande de couple, la vitesse angulaire requise pour chaque support par la formule (2) ce qui revient à une pseudo-inversion de la Jacobienne. La contrainte imposée pour tenir compte de la redondance est la recherche d'un mouvement à énergie minimale.

$$\sigma_c = [A'(A.A')^{-1}] \, C \qquad\qquad\qquad (2)$$

L'expérience a montré que cette approche conduit souvent à délaisser un gyrodyne dont la réorientation vers la direction requise demande trop de vitesse à tous les supports, avec le résultat que finalement la grappe comporte une toupie « dormante », tandis que toutes les autres se regroupent dans une direction opposée. La grappe est alors dans une configuration singulière : le moment cinétique est maximum dans cette direction opposée et il est impossible d'obtenir un couple selon cette direction.

Il existe des algorithmes d'évitement local des singularités par des mises en vitesse des cardans, telles que le couple total résultant soit nul. Mais ces algorithmes sont peu efficaces, car l'approche de la singularité est détectée tardivement faute de prédictions sur le profil de couple à suivre. On est en conséquence conduit à surdimensionner la capacité de la grappe, afin de s'affranchir de la plupart des singularités.

Une autre approche, qu'on peut qualifier de guidage global continu, implique de calculer, avant le début de la manoeuvre de changement d'attitude du satellite, la meilleure trajectoire de reconfiguration de grappe σ(t) pendant toute la manoeuvre, afin d'éviter de passer à proximité d'une configuration singulière. Ce calcul est très lourd. Il doit être fait au sol, puis téléchargé.

EP1 002 716 fournit un procédé permettant, dans le pilotage de l'attitude par gyrodynes, de s'affranchir du problème des singularités, tout en limitant la charge de calcul associée. Le procédé selon EP 1 002 716 permet alors d'exploiter l'intégralité de la capacité de la grappe pour les basculements de l'attitude du satellite.

Pour cela, EP 1 002 716 utilise notamment le fait que la capacité de couple d'un gyrodyne n'est limitée que par la vitesse de rotation maximale du moteur d'entraînement du cardan. EP 1 002 716 utilise également la constatation qu'il est possible de passer transitoirement dans une configuration singulière, à condition que ce soit au cours de la reconfiguration de la grappe de gyrodynes vers une consigne prédéterminée et alors que les cardans sont animés d'une vitesse angulaire importante.

En conséquence EP 1 002 716 propose un procédé de pilotage de l'attitude d'un satellite, par commande d'un des gyrodynes d'une grappe (généralement d'au moins quatre gyrodynes), ayant des toupies respectives montées sur des cardans montés rotatifs sur une plate-forme du satellitte, autour d'axes d'orientations différentes, suivant la revendication 1 de EP 1 002 716.

EP 1 002 716 permet aussi de réduire la durée des basculements par la réduction des phases d'accélération et de décélération angulaires de début et de fin de manoeuvre. Pratiquement, la montée en vitesse sera quasi-instantanée en regard du temps de réponse de l'asservissement de système de contrôle d'attitude. Le moment cinétique interne out réorienté dans la direction adéquate pour obtenir le profil de vitesse et d'attitude du satellite recherché avant que ce système n'intervienne.

Le procédé de EP 1 002 716 permet en outre de prendre en compte une contrainte de domaine angulaire d'orientation de chaque support en limitant le domaine à une plage déterminée, par exemple de 360° , on peut ainsi éviter des liaisons par bagues et balais et utiliser des câbles pour le pelage de la puissance et des signaux.

EP 1 002 716 propose également un dispositif de pilotage d'attitude suivant la revendication 10 de EF 1 002 716.

Dans un tel dispositif, il est passible de borner le domaine de débattement angulaire de l'axe cardan d'un gyrodyne 1-axe (par exemple à $\pm$ ½ tour).

Le document de brevet JP 01 226 496 divulgue un actionneur gyroscopique, selon le préambule de la revendication 1, comprenant, en référence aux dessins de ce document, un support (12, 13) monté sur une embase (14) par dos moyens (15) permettant de le faire tourner autour d'un premier axe (12a), et portant une toupie (110) par l'intermédiaire de moyens (11.) permettant del'entraîner en rotation à vitesse élevée autour d'un second axe (10a) orthogonal au premier axe. A l'extrémité du support (12, 13) du côté opposé à l'embase, le support comprend des moyens sur lesquels tourne l'arbre de la toupie autour du second axe.

Le document de brevet US 5 256 942 montre un actionneur gyroscopique, selon le préambule de la revendication 1, avec, en référence aux dessins de ce document, une toupie en forme de deux flasques (16) reliés par un arbre (15). Cet arbre est supporté des deux côtés par l'intermédiaire d'un arbre perpendiculaire (30) dans un encadrement (12), s'opposant ainsi à JP 01 226 496.

Le problème à la base de l'invention est de proposer un gyrodyne de petite taille, peu encombrant, capable de fournir des couples suffisants pour provoquer des manoeuvres rapides de satellites de classes intermédiaires, utilisable avantageusement dans une dispositif selon EP 1 002 716, et dont la toupie comprend deux flasques reliés par un arbre de diamètre très inférieur à celui des flasques et dont le support comporte des moyens dans lesquels tourne l'arbre.

A cet effet, l'invention propose un actionneur gyroscopique selon la revendication 1. Des modes de réalisation avantageux de l'actionneur gyroscopique de l'invention font l'objet des revendications dépendantes 2 à 10.

Les caractéristiques ci-dessus ainsi que d'autres apparaîtront mieux à la lecture de la description qui suit d'un mode particulier de réalisation de l'invention, donné à titre non limitatif. La description se réfère aux dessins qui l'accompagnent, dans lesquels :

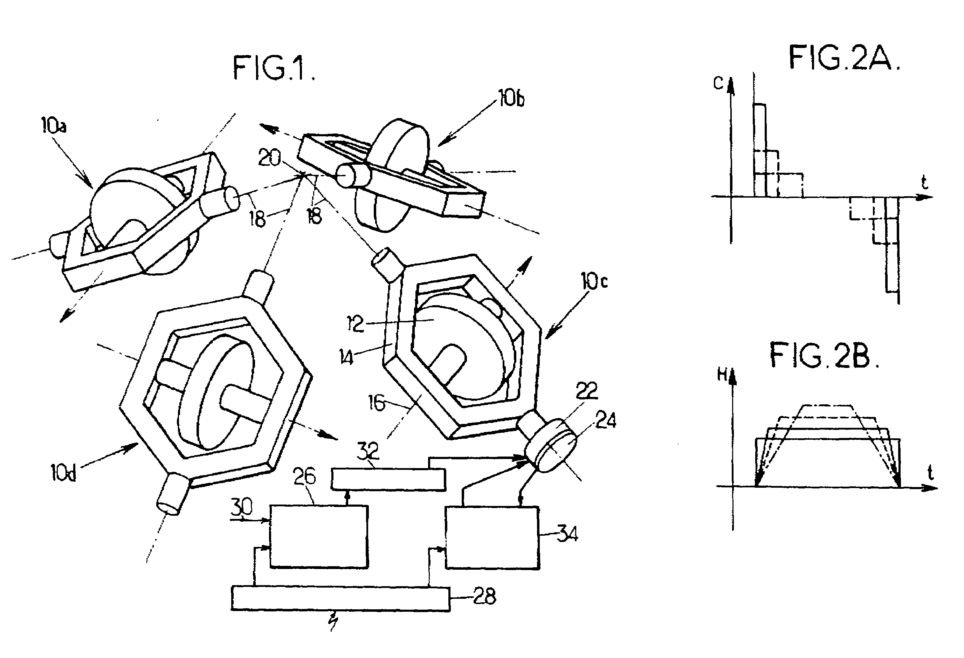

- la a figure 1 est un schéma en perspective montrant une disposition possible de quatre gyrodynes 1-axe d'une grappe, en position canonique ;
- les figures 2A et 2B montrent la variation dans le temps du couple appliqué par un gyrodyne et un moment cinétique H échangé avec la plate-forme, pour plusieurs profils de mise en vitesse ;
- la figure 3 montre un gyrodyne utilisable dans un dispositif selon EP 1 002 716.

La figure 1 montre une grappe de quatre gyrodynes 10a, 10b, 10c, 10d identiques, ayant chacun une toupie 12 montée sur un cardan 14 de façon à pouvoir tourner autour d'un axe 16. Un moteur non représenté maintient la toupie en rotation, généralement à vitesse constante. Chaque cardan est monté sur la plate-forme du satellite (non représentée) de façon à pouvoir tourner autour d'un axe 18 orthogonal à l'axe 16. Les axes 18 ont des orientations différentes. Dans le cas représenté, ils occupent les arêtes d'une pyramide régulière de sommet 20.

Chacun des cardans est muni d'un moteur 22, dont un seul est représenté, permettant de le faire tourner autour de l'axe 18 respectif. Un capteur angulaire 24 donne une information sur l'orientation du cardan et donc du plan de la roue 12.

Le maintien du satellite dans une attitude de consigne dans un repère inertiel est assuré par un système de commande d'attitude qui peut être d'un type connu. Il comporte un organe 26 de calcul et de commande du moteur 22 qui reçoit des consignes d'orientation d'un émetteur-récepteur 28 de liaison avec le sol et des signaux 30 provenant de capteurs non représentés, tels que capteurs d'étoile et d'horizon terrestre, etc... Cet organe commande des circuits de puissance 32 alimentant les moteurs. Ce système a généralement une constante de temps relativement longue, de quelques secondes à plusieurs dizaines de secondes.

Le dispositif comporte également des moyens de commande supplémentaires 34 dans lequel des positions finales à donner aux cardans des gyrodynes sont téléchargées pour provoquer une manoeuvre de réorientation du satellite. Comme il a été indiqué plus haut, cette position finale de tous les gyrodynes est évaluée en partant de l'hypothèse que la reconfiguration sera terminée avant que le système de contrôle d'attitude n'intervienne pour annuler la différence entre l'attitude réelle et l'attitude de consigne du satellite dans un repère inertiel.

La reconfiguration de la grappe s'effectue par réorientation quasi-instantanée et indépendante des axes de toupie, et non pas par suivi pas à pas d'une trajectoire continue prédéterminée.

La configuration initiale est non-singulière et la configuration finale est calculée pour être non-singulière également. Les configurations intermédiaires sont tellement transitoires qu'une improbable perte de rang de la Jacobienne passe virtuellement inaperçue du système de contrôle d'attitude 26.

Il n'est alors plus nécessaire de surdimensionner la capacité de contrôle de la grappe pour éviter les singularités. On peut utiliser l'intégralité de la capacité de moment cinétique de la grappe pour réaliser les manoeuvres. Une partie de la marge gagnée peut être réservée pour dégager du temps pour les transitoires de tranquillisation et d'affinage du pointage en axes inertiels en fin de basculement.

La diminution des vitesses crête de basculement obtenue grâce à la réduction de la durée des phases d'accélération et de décélération apparaît sur les figures 2A et 2B.

En adoptant un couple élevé, on donne au profil de vitesse, reproduit par le profil de moments cinétiques, une forme rectangulaire (lignes en traits pleins sur les figures 2A et 2B).

La capacité de moment cinétique maximal requise de la grappe pour provoquer l'échange de moment cinétique global est jusqu'à deux fois moindre que dans le cas du couple faible représenté par une ligne en traits mixtes. Or, la capacité de moment cinétique est un facteur essentiel de dimensionnement de la grappe (masse, dimensions et vitesse de rotation des toupies), alors que la capacité de couple d'un gyrodyne n'est limitée que par la vitesse de rotation maximale du moteur de cardan.

Il est en conséquence avantageux de rechercher un profil de moment cinétique rectangulaire ou trapézoïdal de moments cinétiques, avec un long palier constant. Les réglages des pentes de départ et d'arrivée assurent la continuité du profil par rapport aux conditions initiales et finales de vitesse angulaire spécifiée.

Dans le cas extrême d'un profil rectangulaire, le guidage de la grappe est très simplifié, puisqu'il suffit de calculer une configuration $\sigma$ de consigne pour la grappe telle que $H(\sigma) = I_{sat}\Omega_{sat}$ ($\Omega_{sat}$ étant la vitesse angulaire) au lieu d'une trajectoire continue $\sigma(t)$.

Pour cela, une consigne de position est envoyée en boucle ouverte à chaque moteur au début de chaque manoeuvre. L'asservissement en position utilise un codeur angulaire et réoriente le cardan au plus vite ; la seule limite est la bande passante du contrôle des moteurs de cardan et leur vitesse maximale.

Le moment cinétique interne est réorienté de façon quasi-instantanée en regard des temps de réponse de l'asservissement de contrôle d'attitude. Si nécessaire, le système de contrôle d'attitude peut être mis hors service pendant la reconfiguration de grappe ou sa commande de couple limitée à une valeur très inférieure à la capacité des gyrodynes. Pour cela, on peut utiliser des techniques de saturation ou de filtrage. Les moteurs des cardans peuvent être du type pas à pas. On supprime ainsi la boucle d'asservissement en position, puisque le moteur pas à pas est directement commandé en position. Le contrôle fin des microperturbations et des dépointages peut alors être assuré non pas par de petites réorientations des axes cardans, mais par l'accélération ou la décélération des toupies d'inertie, le système s'apparentant alors à une gerbe instationnaire de roues de réaction.

Une fois la grappe reconfigurée, le satellite est animé de la bonne vitesse autour de l'axe choisi, aux incertitudes sur les inerties et les alignements près.

Comme la reconfiguration n'est pas strictement instantanée, il se crée une erreur d'attitude par rapport au profil théorique de consigne. Le système de contrôle d'attitude doit annuler cette erreur.

La configuration d'arrivée des cardans étant choisie assez loin d'une singularité, le système de contrôle d'attitude peut compenser ces erreurs sans difficulté par une loi de guidage local classique de la grappe. Même au bout de plusieurs manoeuvres, les excursions des positions cardans autour de la configuration de consigne restent limitées et la grappe peut être ramenée en configuration canonique lors de phases de désaturation en période de veille.

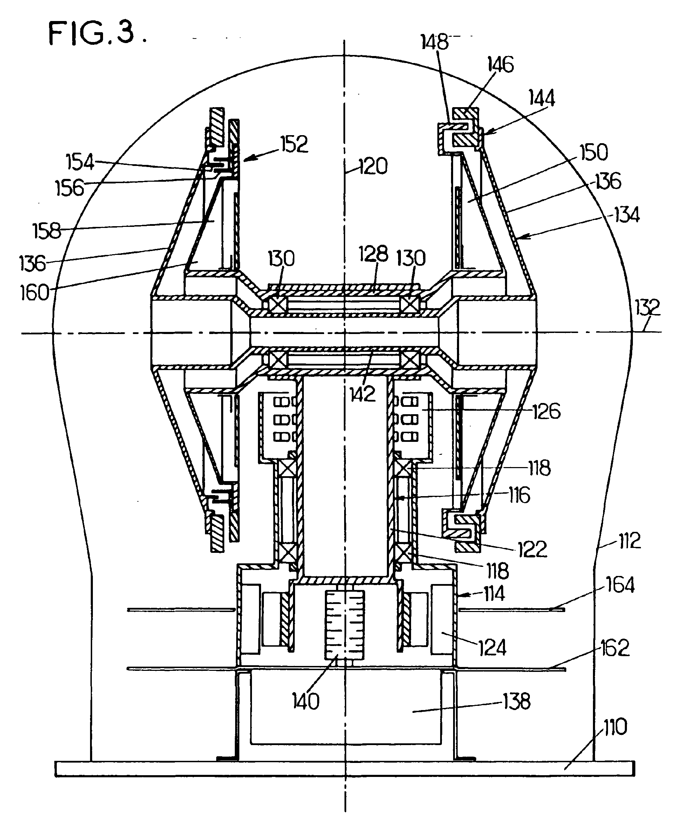

Chacun des gyrodynes peut avoir la constitution montrée en figure 3. Le gyrodyne comporte alors une embase 110 qui définit, avec une enveloppe étanche 112, un volume dans lequel est placé l'ensemble de l'actionneur. Sur l'embase 110 est fixé un mécanisme de basculement ayant une partie statorique 114 et une partie rotorique qui constitue un support 116. La partie statorique 114 est constituée par un manchon dans lequel sont placés des moyens de guidage (roulement à billes par exemple) 118 espacés l'un de l'autre de façon à donner une orientation précise à un axe de basculement 120 autour duquel tourne un tube 122 appartenant au support 116.

Les parties statorique 114 et rotorique comportent également les composants d'un moteur couple à commutation électronique 124, ayant des aimants permanents sur la partie rotorique.

Les passages de courant électrique entre les parties rotorique et statorique 114 peuvent être effectués par des connecteurs tournants 126 à bague et balais, représentés au nombre de trois sur la figure.

La position angulaire du support 116 ou partie rotorique est donnée à tout instant par un codeur 138 présentant une partie fixée rigidement à la partie statorique 114 et un rotor relié au tube 122 par un accouplement élastique 140.

On peut notamment utiliser un codeur optique 138, à sortie incrémentale sous forme de signaux en quadrature. Ces signaux peuvent être traités par une électronique de proximité capable de fonctionner en modes périodemètre, pour le pointage fin, et fréquencemètre, lors des basculements à vitesse rapide.

Les signaux de sortie du codeur 138 peuvent être utilisés dans plusieurs boucles de régulation et de mesure :

- une boucle d'auto-pilotage du moteur 124 effectuant la commutation des phases et le contrôle des courants de phase en fonction de la position instantanée ;
- mesure de l'orientation de la toupie 134, et de contrôle de la vitesse instantanée de basculement pour le contrôle du couple généré sur le satellite.

A l'extrémité du tube 122 du support 116 est fixée une douille 128 portant des guidages 130 qui définissent l'axe 132 de rotation d'une toupie 134 pouvant être regardée comme comportant deux flasques 136 reliés par un arbre creux 142.

Cette disposition permet de choisir le diamètre des roulements 130 de façon à assurer le meilleur compromis possible entre la tenue mécanique lors du lancement et après une durée de vie importante en orbite, un couple visqueux résistif acceptable et une fréquence propre de flexion de l'arbre hors du domaine de fréquence parasite susceptible d'être appliquée. Pour éviter la pollution de l'intérieur de l'enveloppe 112, les roulements à billes peuvent être munis de chicanes qui évitent que de l'huile déposée localement ne s'échappe.

La toupie 134 est entraînée en rotation à une vitesse élevée, généralement constante. Un moteur d'entraînement de la toupie comporte, dans le cas présenté sur la figure, un moteur couple 144 sans balais et sans fer, généralement à commutation électronique, dont le couple compense les dissipations d'énergie par frottement. Il peut comporter généralement un rotor annulaire passif 146 appartenant à la périphérie d'un des flasques 136 et un enroulement 148 alimenté par l'intermédiaire des connecteurs tournants 126 et fixé à une jante 158 parallèle au flasque et solidaire de la douille 128. L'électronique 150 de commande et de régulation de vitesse du moteur 144 peut être placée sur une ou des cartes à circuit imprimé insérées à l'intérieur de la jante 158 parallèle au flasque qui est muni du moteur, et à laquelle on peut donner une forme en champignon.

La vitesse de rotation est mesurée par un tachymètre 152 ayant une couronne 154 fixée à l'autre flasque 136 et une partie active 156 appartenant à une seconde jante 158, similaire à celle qui supporte l'enroulement 148. La seconde jante peut contenir une carte 160 de traitement des signaux fournis par le tachymètre, reliée à l'extérieur par l'un des connecteurs tournant 126.

Le tachymètre 152 est avantageusement sans contacts. On peut notamment utiliser un tachymètre ayant des coupleurs optoélectroniques. Chaque coupleur comporte par exemple au moins une diode électroluminescente et au moins un phototransistor porté par la jante, coopérant avec la couronne annulaire 154 qui présente une alternance de zones de transmission et d'occultation d'un faisceau entre la diode électro-luminescente et le phototransistor.

Les moyens d'alimentation des moteurs 144 à partir d'une source électrique extérieure non représentée peuvent être montés sur une carte 162 placée autour de la base de la partie statorique 114. Les moyens d'alimentation du moteur de basculement 124 peuvent être placés sur une autre carte 164. Des connexions avec l'extérieur, non représentées, permettent de commander le basculement à partir d'un circuit extérieur.

**Revendications**

1. Actionneur gyroscopique comprenant un support (116) monté sur une embase (110) par des moyens (114, 118) permettant de le faire tourner autour d'un premier axe (120), et portant une toupie (134) par l'intermédiaire de moyens (126, 130, 144) permettant de l'entraîner en rotation à vitesse élevée autour d'un second axe (132) orthogonal au premier axe (120), le support (116) comprenant des moyens (128, 130) sur lesquels tourne l'arbre (142) de la toupie, **caractérisé en ce que** la toupie (134) comprend deux flasques (136) reliés par l'arbre (142) , et **en ce que** le support (116) comprend un tube (122) à une extrémité duquel est fixée une douille (128) traversée par l'arbre (142) et portant des guidages (130) en rotation de l'arbre (142) et de la toupie (134) autour du second axe (132).

2. Actionneur selon la revendication 1, **caractérisé en ce que** la douille (128) est fixée à une extrémité du tube (122) du côté opposé à l'embase (110).

3. Actionneur selon l'une quelconque des revendications 1 et 2, **caractérisé en ce que** les moyens d'entraînement de la toupie (134) en rotation comprennent un moteur couple (144) sans balais et sans fer ayant un rotor annulaire passif (146) appartenant à la périphérie d'un des flasques (136) et un enroulement (148) alimenté par l'intermédiaire de connecteurs tournants (126) placés entre le support (116) et l'embase (110).

4. Actionneur selon la revendication 3, **caractérise en ce que** l'enroulement (148) est fixé à la périphérie d'une jante (158) solidaire du support (116).

5. Actionneur selon l'une quelconque des revendications 1 à 4, **caractérisé en ce qu'**il comporte un tachymètre (152) ayant une couronne passive (154) fixée à un flasque (136) et une partie active (156) appartenant à une jante (158) solidaire du support (116).

6. Actionneur selon la revendication 5, **caractérisé en ce que** le tachymètre (152) est sans contact.

7. Actionneur selon la revendication 6, **caractérisé en ce que** le tachymètre (152) comporte au moins un coupleur opto-électronique ayant une diode électroluminescente et un photo-transistor portée par la jante (158), coopérant avec la couronne annulaire (154) qui présente une alternance de zones de transmission et d'occultation d'un faisceau lumineux entre la diode électroluminescente et le phototransistor.

8. Actionneur selon l'une quelconque des revendications 1 à 7, **caractérisé en ce que** les moyens (114, 118) permettant de faire tourner le support (116) comprennent un moteur couple (124) à courant continu et à commutation électronique ayant des aimants permanents sur le support (116) et un enroulement sur une partie statorique (114) solidaire de l'embase (110).

9. Actionneur selon l'une quelconque des revendications 1 à 8, **caractérisé en ce qu'**il comporte un codeur (138) de position angulaire du support (116) ayant une partie solidaire de l'embase (110) et un rotor relié au support (116) par un accouplement élastique (140).

10. Actionneur selon l'une quelconque des revendications 1 à 9, **caractérisé en ce que** l'arbre (142) est de diamètre très inférieur au diamètre des flasques (136).

**Claims**

1. Control moment gyro comprising a gimbal (116) mounted on a base (110) by means (114, 118) making it possible to rotate it about a first axis (120), and carrying a spinner (134) by means (128, 130, 144) making it possible to drive it in rotation at high speed about a second axis (132) orthogonal to the first axis (120), the gimbal (116) comprising means (128, 130) on which the shaft (142) of the spinner rotates, **characterized in that** the spinner (134) comprises two disks (136) interconnected by the shaft (142), and **in that** the gimbal (116) comprises a tube (122) at one end of which a socket (128) is fixed, the socket (128) being passed through by the shaft (142) and carrying guide means (130) for guiding the shaft (142) and the spinner (134) in rotation about the second axis (132).

2. Control moment gyro according to claim 1, **characterized in that** the socket (128) is fixed at an end of the tube (122) which is on the side opposite to the base (110).

3. Control moment gyro according to any one of claims 1 and 2, **characterized in that** the means for driving the spinner (134) in rotation comprises a torque motor (144) with no brushes and no iron and having a passive annular rotor (146) belonging to the periphery of one of the disks (136) and a winding (148) powered via rotary connectors (126) disposed between the gimbal (116) and the base (110).

4. Control moment gyro according to claim 3, **characterized in that** the winding (148) is fixed at the periphery of one rim (158) integral with the gimbal (116).

5. Control moment gyro according to any one of claims 1-4, **characterized in that** it comprises a tachometer (152) having a passive ring (154) fixed to a disk (136) and an active portion (156) belonging to a rim (158) rigidly fixed to the gimbal (116).

6. Control moment gyro according to claim 5, **characterized in that** the tachometer (152) is contactless.

7. Control moment gyro according to claim 6, **characterized in that** the tachometer (152) comprises at least one optoelectronic coupler having a light-emitting diode and a phototransistor carried by the rim (158), cooperating with the annular ring (154) which has alternating transparent zones and opaque zones for a light-beam passing between the light-emitting diode and the phototransistor.

8. Control moment gyro according to any one of claims 1-7, **characterized in that** the means (114, 118) making it possible to rotate the gimbal (116) comprises an electronically switched and direct current torque motor (124) having permanent magnets on the gimbal (116) and a winding on a stator portion (114) rigidly fixed to the base (110).

9. Control moment gyro according to any one of claims 1-8, **characterized in that** it comprises an encoder (138) giving the angular position of the gimbal (116) and having a portion rigidly fixed to the base (110) and a rotor connected to the gimbal (116) via an elastic coupling (140).

10. Control moment gyro according to any one of claims 1-9, **characterized in that** the shaft (142) has a diameter which is much less than the diameter of the disks (136).

**Patentansprüche**

1. Gyroskopisches Stellglied, umfassend einen Halter (116), der auf einem Unterteil (110) durch Mittel (114, 118) angebracht ist, die es ermöglichen, ihn zum Drehen um eine erste Achse (120) zu bringen, und der einen Kreisel (134) mit Hilfe von Mitteln (128, 130, 144) trägt, die es ermöglichen, ihn drehend mit erhöhter Geschwindigkeit um eine zweite Achse (132) anzutreiben, die orthogonal zu der ersten Achse (120) ist, wobei der Halter (116) Mittel (128, 130) umfasst, um die sich die Welle (142) des Kreisels dreht,
**dadurch gekennzeichnet, dass**
der Kreisel (134) zwei Flansche (136) umfasst, die mit der Welle (142) verbunden sind, und dass
der Halter (116) ein Rohr (122) umfasst, an dessen einem Ende eine Fassung (128) befestigt ist, die von der Welle (142) durchquert ist und Drehführungen (130) der Welle (142) und des Kreisels (134) um die zweite Achse (132) herum lagert.

2. Stellglied nach Anspruch 1, **dadurch gekennzeichnet, dass** die Fassung (128) an einem Ende des Rohrs (122) auf der dem Unterteil (110) gegenüberliegenden Seite befestigt ist.

3. Stellglied nach einem der Ansprüche 1 und 2, **dadurch gekennzeichnet, dass** die Antriebsmittel des Drehkreisels (134) einen Drehmoment-Motor (144) ohne Bürste und ohne Eisen umfassen, der einen ringförmigen Passiv-Rotor (146), der dem Rand von einem der Flansche (136) angehört und eine Wicklung (148) umfasst, die mit Hilfe von Drehsteckern (126) beaufschlagt ist, welche zwischen dem Halter (116) und dem Unterteil (110) angeordnet sind.

4. Stellglied nach Anspruch 3, **dadurch gekennzeichnet, dass** die Wicklung (148) an dem Rand einer Felge (158) befestigt ist, die mit dem Halter (116) verbunden ist.

5. Stellglied nach einem der Ansprüche 1 bis 4, **dadurch gekennzeichnet, dass** es einen Tachometer (152) umfasst, der einen Passivkranz (154), der an einem Flansch (136) befestigt ist, und einen Aktivabschnitt (156), der einer Felge (158) angehört, aufweist, die mit dem Halter (116) verbunden ist.

**6.** Stellglied nach Anspruch 5, **dadurch gekennzeichnet, dass** der Tachometer (152) berührungslos ist.

**7.** Stellglied nach Anspruch 6, **dadurch gekennzeichnet, dass** der Tachometer (152) wenigstens einen optoelektronischen Koppler umfasst, der eine elektrolumineszente Diode und einen Phototransistor aufweist, die von der Felge (158) getragen werden, der mit dem ringförmigen Kranz (154) zusammenwirkt, der einen Wechsel von Zonen von Transmission und von Lichtbündel-Verdeckung zwischen der elektrolumineszenten Diode und dem Phototransistor aufweist.

**8.** Stellglied nach einem der Ansprüche 1 bis 7, **dadurch gekennzeichnet, dass** die Mittel (114, 118), die es ermöglichen, den Halter (116) zum Drehen zu bringen, einen Gleichstrom-Drehmoment-Motor (124) mit elektronischer Kommutierung umfassen, der Permanentmagnete an dem Halter (116) und eine Wicklung auf einem Ständer-Abschnitt (114) aufweist, der mit dem Unterteil (110) verbunden ist.

**9.** Stellglied nach einem der Ansprüche 1 bis 8, **dadurch gekennzeichnet, dass** es einen Winkelpositionsgeber (138) des Halters (116) umfasst, der einen Abschnitt, der verbunden ist mit dem Unterteil (110) und einen Rotor, der mit dem Halter (116) durch elastische Kupplung (140) verbunden ist, aufweist.

**10.** Stellglied nach einem der Ansprüche 1 bis 9, **dadurch gekennzeichnet, dass** die Welle (142) einen Durchmesser aufweist, der sehr viel kleiner ist als der Durchmesser der Flansche (136).

FIG.1.

FIG.2A.

FIG.2B.

EP 1 484 247 B1

# FIG.3.

**EP 1 484 247 B1**

## RÉFÉRENCES CITÉES DANS LA DESCRIPTION

**Documents brevets cités dans la description**

- EP 1002716 A
- JP 01226496 A
- US 5256942 A